Europäisches Patentamt

European Patent Office

Office européen des brevets

(19)

(11) Publication number: **0 132 970**
**B1**

# EUROPEAN PATENT SPECIFICATION

(45) Date of publication of patent specification: **04.05.88**

(51) Int. Cl.⁴: **G 01 N 27/16**

(21) Application number: **84304551.9**

(22) Date of filing: **04.07.84**

(54) Apparatus for detecting combustion-supporting constituents in exhaust gas.

(30) Priority: **19.07.83 GB 8319414**

(43) Date of publication of application:
**13.02.85 Bulletin 85/07**

(45) Publication of the grant of the patent:
**04.05.88 Bulletin 88/18**

(84) Designated Contracting States:
**CH DE FR GB IT LI SE**

(56) References cited:
**EP-A-0 034 013**
**FR-A-2 293 711**
**FR-A-2 367 285**
**FR-A-2 370 281**
**US-A-3 887 334**

(73) Proprietor: **Gaydon Technology Limited**
**35-38 Portman Square**
**London W1H OHQ (GB)**

(72) Inventor: **Parker, Peter Harry**
**203 Bromsgrove Road**
**Redditch Worcestershire (GB)**

(74) Representative: **Waters, Jeffrey**
**ARG Patent Department Cowley Body Plant**
**Cowley Oxford OX4 5NL (GB)**

Courier Press, Leamington Spa, England.

## Description

The invention relates to apparatus for detecting combustion-supporting constituents in exhaust gas from an internal combustion engine according to the preamble of claim 1. Such apparatus is disclosed in document EP—A—0034013.

To achieve efficient operation with such engines, the optimum air/fuel ratio depends on various factors such as load, speed, water temperature etc, and may be lean (where the fuel proportion is low) or rich (where the fuel proportion is high in comparison with a stoichiometric mixture. Various proposals have been put forward for detecting combustible or combustion-supporting constituents in the exhaust gas in order to measure the air/fuel ratio of the mixture entering the cylinders with the object of controlling the air/fuel ratio in a feed-back mode. The present invention is concerned with detecting when the air/fuel ratio is lean and in a typical installation may be used· in conjunction with apparatus for detecting when the air/fuel ratio is rich but it could be used independently.

United Kingdom Patent Application GB—A—2 013 892 proposes apparatus comprising two testing chambers each containing an electrical conductor which act as catalysts, an exhaust gas flow path to provide flow of exhaust gas through the testing chambers, a fuel supply for supplying fuel in addition to exhaust gas into one testing chamber so that fuel is combusted at the relevant conductor by combustion-supporting constituents in the exhaust gas and the effect of this combustion can be detected by the response of the conductor to the heating effect of the combustion, in comparison with the response of the conductor to which exhaust gas only is supplied. Exhaust gas is drawn through the apparatus since the outlet portion of the apparatus is to be connected to an engine inlet manifold. European Patent Application EP—A—34 013 discloses a similar apparatus in which only one ·testing chamber and electrical conductor are used, the conductor being alternately subject to fuel in addition to exhaust gas, and to exhaust gas alone.

It has also been proposed in an earlier European Patent Application of the Applicants (published as EP—A—96 514 on 21-12-83) to add the fuel (or combustion-supporting material when operating in the rich region) in such a way that its quantity increases gradually and then to obtain a value corresponding to the maximum heat release at the hot wire sensor.

The present invention is particularly concerned with an apparatus for obtaining a measure of the combustion-supporting constituents in exhaust gas using the maximum heat release measuring technique of Application EP—A—96 514 referred to above.

According to the present invention in an apparatus according to the preamble of claim 1 a damping chamber is provided in the exhaust gas flow path, upstream of the testing chamber, to attenuate flow fluctuations through the testing chamber due to fluctuations in the pressure in the exhaust system, and an outlet portion of the exhaust gas flow path is arranged for connection to an inlet manifold through a convergent-divergent nozzle, which tends to equalise flow through the flow path over a wide range of manifold depression. It has been found that flow fluctuations resulting from the intermittent opening of engine exhaust valves, and from changes in manifold depression, can interfere with accurate measurement but by providing a damping chamber in conjunction with a convergent-divergent nozzle, these fluctuations can be controlled, for example, to within about plus or minus 20% of the nominal mean flow rate, to enable more accurate readings to be obtained.

Preferably an air by-pass passage (which may be provided with a constricting orifice) is provided which connects the outlet portion of the exhaust gas flow path upstream of the convergent-divergent nozzle with the atmosphere. This allows the convergent-divergent nozzle to be of a practical size which is unlikely to become blocked or constricted, without requiring a correspondingly high flow rate through the testing chamber.

As an alternative a bypass passage may be provided in parallel with the part of the flow path through the testing chamber.

The apparatus may include flow constricting orifices in the part of the exhaust gas flow path leading from the damping chamber to the testing chamber, both upstream and downstream of the connection to the fuel supply and a flow constricting orifice in the fuel supply. This arrangement results in effect in a mixing chamber bounded by the orifices and in this mixing chamber, the proportion of fuel gradually increases when the fuel supply is turned on. This is a useful feature when using the peak value maximum heat release technique referred to above.

Preferably a dilution passage incorporating a flow constricting orifice is provided, leading from the damping chamber to a part of the exhaust gas flow path between the fuel supply and the testing chamber. The mixing together of exhaust gas from the dilution passage with the mixture of fuel and exhaust gas assists mixing of the exhaust gas with the fuel and assists the gradual increase in fuel concentration in the testing chamber.

Advantageously, the exhaust gas flow path, the testing chamber, the damping chamber, and a flow-constricting orifice upstream of the damping chamber are all housed in one body, and heating means is provided to discourage formation of liquid condensate in the body.

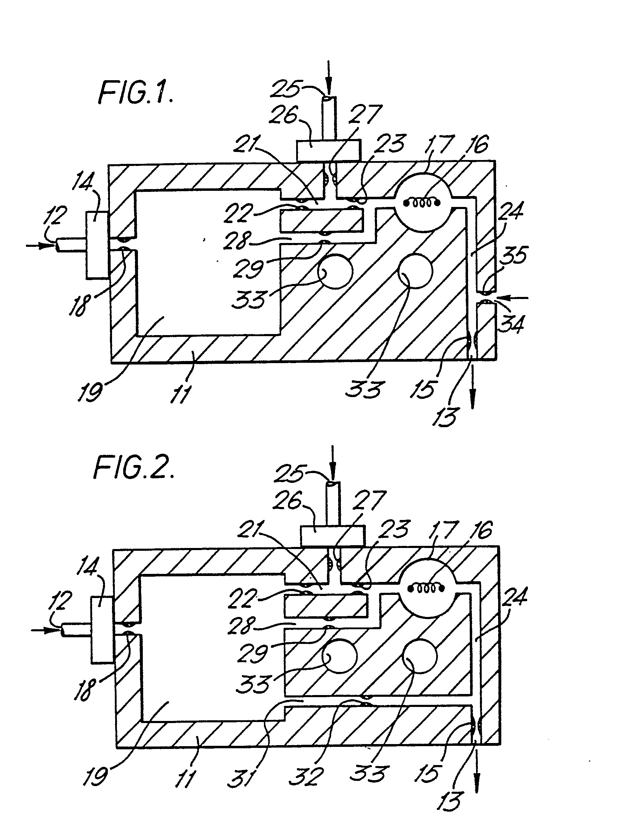

Two embodiments of the invention will be described with reference to the accompanying drawings, in which Figure 1 is a diagrammatic cross-section through a first form of apparatus in accordance with the invention, and Figure 2 is a diagrammatic cross-section through a second form of apparatus in accordance with the invention.

Figure 1 of the drawings shows a corrosion resistant metal body 11 having an inlet 12 from the exhaust system of an internal combustion engine and an outlet 13 leading to the inlet manifold of the internal combustion engine. A solenoid valve 14 is arranged to open the inlet 12 when the apparatus is to be used and to close the inlet when the apparatus is not in use.

Exhaust gas is drawn through the apparatus by a pressure differential between the inlet and outlet, caused primarily by the inlet manifold depression. A convergent-divergent nozzle 15 controls the mean flow rate through the apparatus and holds it substantially constant over a wide range of inlet manifold depression, e.g. for absolute pressures between 0.85 and 0.3 Bar.

An electrically heated platinum or platinum-coated wire 16 is provided within a testing chamber 17. The electrical supply to the hot wire is controlled in such a way as to maintain it at a constant temperature, with the result that when the environment surrounding the wire is such as to generate heat by combustion, a lower current is supplied than when the whole of the heating is performed electrically. The current supplied to the wire then gives a measure of the heating effect caused by combustion. The electrical circuit for providing a constant wire temperature and deriving a signal representative of the heating effect on the wire forms no part of the present invention and will not be described.

The primary exhaust gas flow path from the inlet 12 to outlet 13 through the testing chamber 17, passes through a flow constricting orifice 18, a damping chamber 19, a passage 21 incorporating flow constricting orifices 22 and 23, the testing chamber 17, an outlet passage 24, and the convergent-divergent nozzle 15. A fuel supply 25 is connected to a source of gaseous fuel, typically butane or propane, and is connected through a solenoid valve 26 and a flow constricting orifice 27 to the passage 21 between the orifices 22 and 23. A dilution passage 28 incorporating a flow constricting orifice 29 leads from the damping chamber 19 to the passage 21 at a position downstream of orifice 23 but before the testing chamber 17. Passages 21 and 28 both communicate with the damping chamber 19 near the top thereof. Passage 24 connects with passage 34 upstream of convergent-divergent nozzle 15. The passage 34 has a flow constricting orifice 35 and communicates with atmosphere.

Block 11 incorporates water passages 33 through which water is circulated from the cooling system of the internal combustion engine. When the engine has reached normal operating conditions, the water in these passages serves to maintain the temperature of the apparatus at approximately 80°C.

In use, solenoid valve 14 is opened to provide a supply of exhaust gas through the apparatus from inlet 12 to outlet 13. The size of orifices 22, 23 and 29, is such as to give a desired flow rate through the testing chamber 17. In this condition, with the fuel supply off, the current required in the electrically heated wire 16 to maintain it at a required temperature of for example 1000°C is measured and recorded for comparison purposes. This setting and measuring is carried out automatically.

Fuel is then introduced from inlet 25 by opening solenoid valve 26. The arrangement and sizes of the orifices 22, 23 and 27 is such that the fuel gas concentration in what is in effect a small reservoir between orifices 22, 23 and 27 builds up gradually over a period of perhaps 150 ms. The fuel gas content of the exhaust gas supplied to the testing chamber 17 builds up more slowly, due to the effect of exhaust gas in dilution passage 28 over a period of perhaps 300 ms.

The fuel carried by the exhaust gases impinges on the conductor 16 and if the air/fuel of the original mixture in the internal combustion engine has been lean, the residual oxygen is used up in combusting some of the added fuel gas due to the catalytic effect of the heated platinum conductor. This combustion tends to heat the conductor so that it requires less current to maintain its constant temperature. The current reduction takes place gradually over a period corresponding to that during which the fuel supply is built up gradually.

The current flowing in the conductor 16, or some other measurement of the heat dissipated in the conductor is derived from the electrical control circuit (not shown). This measurement is sampled at frequent intervals, for example every 1.44ms so that the peak value can be detected and recorded to give a measure of the proportion of free oxygen or other combustion-supporting material in the exhaust gas. This in turn gives a measure of·the weakness of the internal combustion engine mixture supply. Means is provided for effecting a correction to the air/fuel mixture but this is not described as it forms no part of the present invention.

A suitable flow rate through the testing chamber 17 is 100 grammes per hour. A large flow rate is undesirable because there would be an associated increased volume flow of contaminants which could coat the conductor and cause it to lose its effectiveness as a catalyst. However, it is not convenient to produce a convergent/divergent nozzle sized to produce 50 g/hr, partly because such a small nozzle could easily become blocked. For this reason, the air bypass passage 34 is provided and its orifice 35 is such as to provide an air by-pass of approximately 450 gr/hr. Thus the nozzle 15 is sized to produce flow rate of approximately 500 g/hr. An important reason for holding the flow rate through the testing chamber to about 50 g/hr is that this keeps the butane or propane supply within acceptable limits. The intention is that a small gas canister should have a life of at least 1 year or 20,000 kilometres.

Without the damping chamber 19, pressure pulses in the internal combustion engine exhaust system, associated with the firing cycle of the engine, would tend to produce surges of flow and pressure within the apparatus and these would interfere with the accurate steady operation of the system. In particular, the signal to noise ratio in the electrical measuring circuit decreases to such an extent that accurate readings cannot be obtained. The damping chamber 19, particularly when taken in association with the flow control orifice 18, tends to damp out these surges so that they are of the order of plus or minus 20% of the nominal flow rate. With variations in flow of this order, the apparatus operates effectively. A suitable volume for the damping chamber is approximately 100 mls. The air by pass passage 34 to atmosphere with orifice 35 also tends to reduce pulsation effects in the testing chamber 17.

Hot exhaust gases carry substantial quantities of water, both from the atmosphere and from the combustion process and this water often contains undesirable contaminants. Any tendency for this water with its contaminants to condense on the conductor 16 would tend to render it ineffective over a period of time. The heating of the apparatus by water from the internal combustion engine through passages 33 restricts this condensation. Also, any condensation tend to occur in the damping chamber 19 and the liquid of course falls to the bottom of this chamber. Small quantities of condensate which occur if the apparatus is not fully up to temperature, can be evaporated again and pass through the remainder of the apparatus in a gaseous state.

It is intended that the apparatus should be brought into operation only occasionally in order to monitor the air/fuel ratio in the supply to the engine and that the engine should then be set to a correct air/fuel ratio following this measurement. Thus solenoid valve 14 is closed for most of the period while the engine is operating and the apparatus remains inoperative.

When the apparatus is brought into operation, a typical cycling period is a 2.5 second period with exhaust gas only impinging on coated wire 16 (valve 14 open, valve 26 closed) followed by a 1.5 second period with exhaust gas and fuel impinging on coated wire 16 (valve 14 open, valve 26 open). This would be repeated five times and the measurements thus obtained of free oxygen (or other combustion-supporting material) in the exhaust gas averaged. The air fuel ratio is then corrected if necessary.

Referring to Figure 2, in which like reference numerals have been given to like parts, the second form of apparatus differs from the first only in that the air bypass 34 is not present and a by-pass passage 31 is provided leading from damping chamber 19 to outlet passage 24 upstream of convergent-divergent nozzle 15. The by-pass passage 31 has an orifice 32 sized in relation to orifices 22, 23 and 29 so that there is a greater flow through the bypass 31 than through the testing chamber by a ratio of about 4:1.

There is a small volume of the damping chamber below the outlet to passage 31 and this acts as a reservoir for water and any other liquid which may condense within the damping chamber. If there is an excess of condensation, it fills the reservoir and overflows through the bypass passage 31. The comparatively large size of orifice 32 and of the nozzle 15 through which the liquid has to flow, enables the liquid to escape without causing a blockage.

A suitable flow rate through the apparatus is 500 g/hr, of which 400 g/hr would pass through the bypass 31 and 100 g/hr would pass through the testing chamber 17.

## Claims

1. Apparatus for detecting combustion-supporting constituents in exhaust gas from an internal combustion engine comprising: a testing chamber (17) containing an electrical conductor (16) which acts as a catalyst, an exhaust gas flow path to provide flow of exhaust gas through the testing chamber (17), a fuel supply (25) for intermittently supplying fuel in addition to exhaust gas into the testing chamber (17) so that fuel is combusted at the conductor (16) by combustion-supporting constituents in the exhaust gas and the effect of this combustion can be detected by the response of the conductor to the heating effect of the combustion, characterised in that a damping chamber (19) is provided in the exhaust gas flow path, upstream of the testing chamber (17), to attenuate flow fluctuations through the testing chamber (17) due to fluctuations in the pressure in the exhaust system, and in that an outlet portion (24) of the exhaust gas flow path is arranged for connection to an engine inlet manifold through a convergent-divergent nozzle (15) which tends to equalise flow through the flow path over a wide range of manifold depression.

2. Apparatus according to claim 1, characterised in that an air by-pass passage (34) connects the outlet portion (24) of the exhaust gas flow path upstream of the convergent-divergent nozzle (15) with the atmosphere.

3. Apparatus according to claim 2, characterised in that the air by-pass passage (34) includes a constricting orifice (35).

4. Apparatus according to claim 1, characterised by a by-pass passage (31) in parallel with the part of the flow path through the testing chamber (17) to provide more flow through the convergent-divergent nozzle than through the testing chamber.

5. Apparatus according to claim 4, characterised by a constricting orifice (32) in the by-pass passage (31).

6. Apparatus according to any of the preceding claims, characterised by flow constricting orifices (22, 23) in the part of the exhaust gas flow path leading from the damping chamber (19) to the testing chamber (17), both upstream and downstream of the connection to the fuel supply (25) and a flow constricting orifice (27) in the fuel supply.

7. Apparatus according to any of the preceding claims, characterised by a dilution passage (28) incorporating a flow constricting orifice (29) and leading from the damping chamber (19) to the part of the exhaust gas flow path between the fuel supply (25) and the testing chamber (17).

8. Apparatus according to any of the preceding claims, characterised in that the exhaust gas flow path, the testing chamber (17), the damping chamber (19), and a flow constricting orifice (18) upstream of the damping chamber, are all housed in one body (11), and in that heating means (33) is provided to discourage formation of liquid condensate in the body.

## Patentansprüche

1. Vorrichtung zum Feststellen von verbrennungsunterhaltenden Bestandteilen im Abgas von einem Motor mit Innenverbrennung, mit: einer Testkammer (17), die einen elektrischen Leiter (16) enthält, der als Katalysator wirkt, einem Abgasströmungsweg zur Schaffung einer Abgasströmung durch die Testkammer (17), einer Brennstoffzufuhr (25) zum intermittierenden Zuführen von Brennstoff zusätzlich zum Abgas in die Testkammer (17), so daß der Brennstoff durch die verbrennungsunterhaltenden Bestandteile in dem Abgas an dem Leiter (16) verbrannt wird und der Effekt dieser Verbrennung durch das Ansprechen des Leiters auf den Heizeffekt der Verbrennung festgestellt werden kann, dadurch gekennzeichnet, daß in dem Abgasströmungsweg an einer in Strömungsrichtung vor der Testkammer (17) befindlichen Stelle eine Dämpfungskammer (19) vorgesehen ist, die zum Schwächen von Strömungsschwankungen durch die Testkammer (17) aufgrund von Schwankungen beim Druck in dem Abgassystem ausgelegt ist, und daß ein Auslaßbereich (24) des Abgasströmungswegs für eine Verbindung mit einem Motoransaugluftverteiler durch eine konvergent-divergente Düse (15) ausgelegt ist, die die Tendenz hat, die Strömung durch den Strömungsweg hindurch über einen großen Verteilerunterdruckbereich auszugleichen.

2. Vorrichtung nach Anspruch 1, dadurch gekennzeichnet, daß ein Luft-Bypasskanal (34) den Auslaßbereich (24) des Abgasströmungswegs an einer in Strömungsrichtung vor der konvergent-divergenten Düse (15) befindlichen Stelle mit der Atmosphäre verbindet.

3. Vorrichtung nach Anspruch 2, dadurch gekennzeichnet, daß der Luft-Bypasskanal (34) eine Verengungsöffnung (35) beinhaltet.

4. Vorrichtung nach Anspruch 1, gekennzeichnet durch einen parallel zu dem durch die Testkammer (17) verlaufenden Teil des Strömungswegs vorgesehenen Bypasskanal (31) zur Schaffung einer größeren Strömung durch die konvergent-divergente Düse als durch die Testkammer.

5. Vorrichtung nach Anspruch 4, gekennzeichnet durch eine Verengungsöffnung (32) in dem Bypasskanal (31).

6. Vorrichtung nach einem der vorausgehenden Ansprüche, gekennzeichnet durch Strömungsverengungsöffnungen (22, 23) in dem von der Dämpfungskammer (19) zu der Testkammer (17) führenden Teil des Abgasströmungswegs sowohl in Strömungsrichtung vor als auch in Strömungsrichtung hinter der Verbindung mit der Brennstoffzufuhr (25), und durch eine Strömungsverengungsöffnung (27) in der Brennstoffzufuhr.

7. Vorrichtung nach einem der vorausgehenden Ansprüche, gekennzeichnet durch einen Verdünnungskanal (28), der eine Strömungsverengungsöffnung (29) beinhaltet und von der Dämpfungskammer (19) zu dem zwischen der Brennstoffzufur (25) und der Testkammer (17) befindlichen Teil des Abgasströmungswegs führt.

8. Vorrichtung nach einem vorausgehenden Ansprüche, dadurch gekennzeichnet, daß der Abgasströmungsweg, die Testkammer (17), die Dämpfungskammer (19) und eine in Strömungsrichtung vor der Dämpfungskammer befindliche Verengungsöffnung (18) alle in einem Körper (11) untergebracht sind, und daß eine Heizeinrichtung (33) vorgesehen ist, um der Bildung von Flüssigkeitskondensat in dem Körper entgegenzuwirken.

## Revendications

1. Appareil permettant de détecter les constituants entretenant la combustion présents dans les gaz d'échappement provenant d'un moteur à combustion interne, comprenant une chambre d'essai (17) contenant un conducteur électrique (16) qui sert de catalyseur, un trajet d'écoulement des gaz d'échappement prévu en vue de fournir un écoulement de gaz d'échappement à travers la chambre d'essai (17), une alimentation de carburant (25) permettant d'amener de manière intermittente du carburant, en plus des gaz d'échappement, dans la chambre d'essai (17) de façon que du carburant soit brûlé sur le conducteur (16) grâce aux constituants entretenant la combustion qui sont présents dans les gaz d'échappement et que l'effet de cette combustion puisse être détecté par la réponse de ce conducteur à l'élévation de température résultant de cette combustion, caractérisé en ce qu'il est prévu, dans le trajet d'écoulement des gaz d'échappement, une chambre d'amortissement (19) située en amont de la chambre d'essai (17) et permettant d'atténuer les fluctuations de débit à travers cette chambre d'essai (17) qui sont dues à des fluctuations de la pression régnant dans le système d'échappement, et en ce qu'une partie de sortie (24) du trajet d'écoulement des gaz d'échappement est agencée pour être branchée sur un collecteur d'admission du moteur par l'intermédiaire du tuyère convergente-divergente (15), afin d'égaliser le débit à travers le trajet d'écoulement sur une large gamme de dépressions au collecteur.

2. Appareil suivant la revendication 1, caractérisé en ce qu'un passage d'amenée d'air en dérivation (34) fait communiquer avec l'atmosphère la partie de sortie (24) du trajet d'écoulement des gaz d'échappement qui est située en amont de la tuyère convergente-divergente (15).

3. Appareil suivant la revendication 2, caractérisé en ce que le passage d'amenée d'air en dérivation (34) comporte un orifice d'étranglement (35).

4. Appareil suivant la revendication 1, caractérisé par un passage d'amenée en dérivation (31) disposé en parallèle avec la partie du trajet d'écoulement qui traverse la chambre d'essai (17), afin de fournir plus de débit à travers la tuyère convergente-divergente qu'a travers la chambre d'essai.

5. Appareil suivant la revendication 1, caractérisé par un orifice d'étranglement (32) situé dans le passage d'amenée en dérivation (31).

6. Appareil suivant l'une quelconque des revendications précédentes, caractérisé par des orifices d'étranglement de débit (22, 23) disposés dans la partie du trajet d'écoulement des gaz d'échappement qui conduit de la chambre d'amortissement (19) à la chambre d'essai (17), un en amont et un autre en aval de la jonction avec l'alimentation en carburant (25), ainsi que par un orifice d'étranglement de débit (27) situé dans cette alimentation en carburant.

7. Appareil suivant l'une quelconque des revendications précédentes, caractérisé par un passage de dilution (28) dans lequel est placé un orifice d'étranglement de débit (29) et qui conduit de la chambre d'amortissement (19) à la partie du trajet d'écoulement des gaz d'échappement qui est située entre l'alimentation en carburant (25) et la chambre d'essai (17).

8. Appareil suivant l'une quelconque des revendications précédentes, caractérisé en ce que le trajet d'écoulement des gaz d'échappement, la chambre d'essai (17), la chambre d'amortissement (19) et un orifice d'étranglement de débit (18) situé en amont de cette chambre d'amortissement sont tous logés dans un corps (11) et en ce qu'il est prévu des moyens de chauffage (33) permettant d'éviter la formation de condensat liquide dans ce corps.

FIG.1.

FIG.2.